# EUROPEAN PATENT SPECIFICATION

(11) **EP 3 637 933 B1**
(45) Date of publication and mention of the grant of the patent: **06.08.2025**
(21) Application number: 17912711.3
(22) Date of filing: 08.06.2017
(51) Int. Cl.: H04W 74/08, H04W 72/02

(54) **UPLINK GRANT-FREE TRANSMISSION**
ZULASSUNGSFREIE UPLINK-ÜBERTRAGUNG
TRANSMISSION DE LIAISON MONTANTE SANS AUTORISATION

(43) Date of publication of application: 15.04.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/021397
(87) International publication number: WO 2018/225230

(56) References cited:
- HUAWEI ET AL: "Grant-free transmission for UL URLLC", vol. RAN WG1, no. Hangzhou, China; 20170515 - 20170519, 14 May 2017 (2017-05-14), XP051272149, Retrieved from the Internet <URL:http://www.3gpp.org/ftp/Meetings_3GPP_SYNC/RAN1/Docs/> [retrieved on 20170514]
- LENOVO ET AL: "HARQ design for UL grant-free URLLC transmission", vol. RAN WG1, no. Athens, Greece; 20170213 - 20170217, 12 February 2017 (2017-02-12), XP051209814, Retrieved from the Internet <URL:http://www.3gpp.org/ftp/Meetings_3GPP_SYNC/RAN1/Docs/> [retrieved on 20170212]
- INTEL CORPORATION: "On UL grant free transmissions", vol. RAN WG1, no. Hangzhou; 20170515 - 20170519, 7 May 2017 (2017-05-07), XP051263064, Retrieved from the Internet <URL:http://www.3gpp.org/ftp/tsg_ran/WG1_RL1/TSGR1_89/Docs/> [retrieved on 20170507]
- CATT: "Further details of UL grant-free transmission for URLLC", vol. RAN WG1, no. Hangzhou, China; 20170515 - 20170519, 14 May 2017 (2017-05-14), XP051272719, Retrieved from the Internet <URL:http://www.3gpp.org/ftp/Meetings_3GPP_SYNC/RAN1/Docs/> [retrieved on 20170514]
- "On UL grant free transmissions", 3GPP TSG RAN WG1 MEETING #89 R1- 1707407, 7 May 2017 (2017-05-07), XP051263064, Retrieved from the Internet <URL:http://www.3gpp.org/ftp/tsg-ran/WG1-RL1/TSGR1-89/Docs/Rl-1707407.zip> [retrieved on 20170718]
- SONY: "On using uplink grant free resource for URLLC", 3GPP TSG RAN WG1 MEETING #89 RL-1708250, 6 May 2017 (2017-05-06), XP051262327, Retrieved from the Internet <URL:http://www.3gpp.org/ftp/tsg_ran/WG1-RL1/TSGR1-89/Docs/Rl-1708250.zip> [retrieved on 20170718]

## Description

### Technical Field

The present invention relates to uplink grant-free transmission in next-generation mobile communication systems.

### Background Art

In the UMTS (Universal Mobile Telecommunications System) network, the specifications of long term evolution (LTE) have been drafted for the purpose of further increasing high-speed data rates, providing lower latency and so on (see non-patent literature 1). In addition, the specification of LTE-A (LTE advanced and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "FRA (Future Radio Access)," "5G (5th generation mobile communication system)," "5G+ (plus)," "NR (New Radio)," "NX (New radio access)," "FX (Future generation radio access)," "LTE Rel. 14 or 15 and later versions," etc.).

In existing LTE systems (for example, LTE Rel. 8 to 13), downlink (DL) and/or uplink (UL) communications are carried out by using 1-ms subframes (also referred to as "transmission time intervals (TTIs)," and the like). This subframe is the unit of time it takes to transmit 1 channel-encoded data packet, and serves as the unit of processing in, for example, scheduling, link adaptation, retransmission control (HARQ (Hybrid Automatic Repeat reQuest)) and so on.

Furthermore, a radio base station (for example, an eNB (eNode B)) controls the allocation (scheduling) of data for user terminals (UE (User Equipment)), and sends data scheduling commands to the UEs by using downlink control information (DCI). For example, when a UE that conforms to existing LTE (for example, LTE Rel. 8 to 13) receives DCI that commands UL transmission (also referred to as a "UL grant"), the UE transmits UL data in a subframe that is located a predetermined period later (for example, 4 ms later).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

HUAWEI ET AL: "Grant-free transmission for UL URLLC", May 14, 2017 relates to resource configuration for grant-free URLLC.

LENOVO ET AL: "HARQ design for UL grant-free URLLC transmission", February 12, 2017 relates to possible issues of grant-free based uplink URLLC transmission for NR.

INTEL CORPORATION: "On UL grant free transmissions", May 7, 2017 relates to design aspects of UL grant-free transmission in application to low latency services.

### Summary of Invention

### Technical Problem

In future radio communication systems (for example, NR), it is likely that data scheduling will be controlled differently than in existing LTE systems. For example, in order to provide communication services that require low latency and high reliability (for example, URLLC (Ultra Reliable and Low Latency Communications)), research is underway to reduce the latency in communication (latency reduction).

To be more specific, in order to reduce the latency time before UL data transmission is started, studies are in progress to perform communication by permitting contention in UL transmission among multiple UEs. For example, studies are in progress to allow UEs to transmit UL data without UL grants from radio base stations (also referred to as "UL grant-free transmission," "UL grant-less transmission," "contention-based UL transmission," etc.).

Carrying out UL grant-free transmission in the form of repetition transmissions is under study. Failure to perform repetition transmission properly might result in a decline in communication throughput, spectral efficiency, and so forth.

It is therefore an object of the present invention to provide a user terminal and a radio communication method, whereby repetition transmissions of UL grant-free transmission can be performed properly.

### Solution to Problem

The object of the invention is achieved by the subject-matter of the independent claims. Advantageous embodiments are defined in the dependent claims. Further examples are provided for facilitating the understanding of the invention.

### Advantageous Effects of Invention

According to the present invention, it is possible to perform repetition transmissions of UL grant-free transmission properly.

### Brief Description of Drawings

FIG. 1A is a diagram to explain UL grant-based transmission, and FIG. 1B is a diagram to explain UL grant-free transmission;
FIG. 2 is a diagram to show examples of resources for use in UL grant-free transmission;
FIGs. 3A and 3B are diagrams to show examples of methods of controlling repetition transmissions;
FIGs. 4A and 4B are diagrams to show examples of RV indices, according to a first example of the present invention;
FIG. 5 is a diagram to show an example of a case in which RV indices are provided based on repetition resources, according to a claimed embodiment of the present invention;
FIGs. 6A and 6B are diagrams to show examples of cases in which RV indices are provided based on real transmission, according to the second example;
FIG. 7 is a diagram to show an exemplary schematic structure of a radio communication system according to one embodiment of the present invention;
FIG. 8 is a diagram to show an exemplary overall structure of a radio base station according to one embodiment of the present invention;
FIG. 9 is a diagram to show an exemplary functional structure of a radio base station according to a claimed embodiment of the present invention;
FIG. 10 is a diagram to show an exemplary overall structure of a user terminal according to one embodiment of the present invention;
FIG. 11 is a diagram to show an exemplary functional structure of a user terminal according to a claimed embodiment of the present invention; and
FIG. 12 is a diagram to show an exemplary hardware structure of a radio base station and a user terminal according to one embodiment of the present invention.

### Description of Embodiments

Envisaging future radio communication systems (including, for example, LTE Rel. 14, 15 and later versions, 5G, NR, etc., and hereinafter collectively referred to as "NR"), UL grant-based transmission, in which UL data is transmitted based on UL grants, is not enough by itself to enable communication with low latency, and it is necessary to employ UL grant-free transmission, in which UL data is transmitted without UL grants.

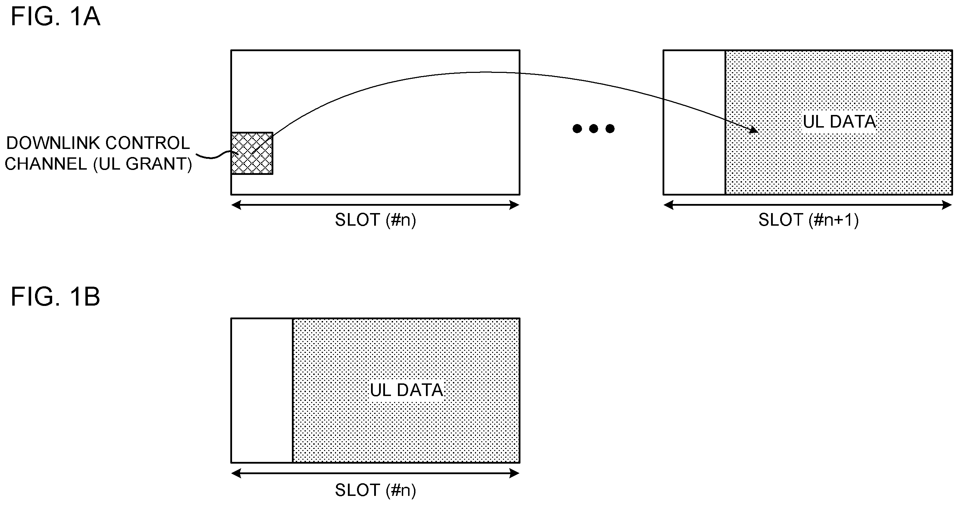

Now, UL grant-based transmission and UL grant-free transmission will be explained below. FIG. 1A is a diagram to explain UL grant-based transmission, and FIG. 1B is a diagram to explain UL grant-free transmission.

In UL grant-based transmission, as shown in FIG. 1A, a radio base station (which may be referred to as, for example, a "base station (BS)," a "transmission/reception point (TRP)," an "eNode B (eNB)," a "gNB," etc.) transmits a downlink control channel (UL grant) that commands allocation of UL data (PUSCH (Physical Uplink Shared CHannel)), and a UE transmits the UL data based on this UL grant.

Meanwhile, in UL grant-free transmission, as shown in FIG. 1B, a UE transmits UL data without receiving UL grants, which are provided for scheduling data.

Now, envisaging NR, research is underway to provide support for configuring/re-configuring, at least semi-statically, resource regions for allocating UL data that is to be transmitted in UL-grant free transmission. Studies are underway to include at least physical, time and/or frequency domain resources in resource configuration.

For example, studies are in progress to configure resources for use in UL grant-free transmission by way of higher layer signaling, as in UL semi-persistent scheduling (SPS), which is used in existing LTE (for example, LTE Rel. 8-13). Therefore, UL grant-free transmission can also be regarded as a function to enable UL SPS resource configuration under specific conditions. For example, if a resource is configured by higher layer signaling in a relatively long periodicity (for example, 10 ms), this scheduling may be referred to as "UL SPS," while the phrase "UL grant-free transmission" may be used if the same resource is configured by higher layer signaling in a relatively short periodicity (for example, 1 ms, 0.5 ms, etc.). Also, UL grant-free transmission, in addition to having relatively short resource periodicities, may be furthermore designed so that a UE can judge or decide whether or not to perform UL transmission in configured resources based on whether or not transmission data is stored in its own buffer. That is, UL grant-free transmission may refer to the configuration to allow skipping UL transmission (UL skipping) when the periodicity of resources to be configured is relatively short, and there is no UL data.

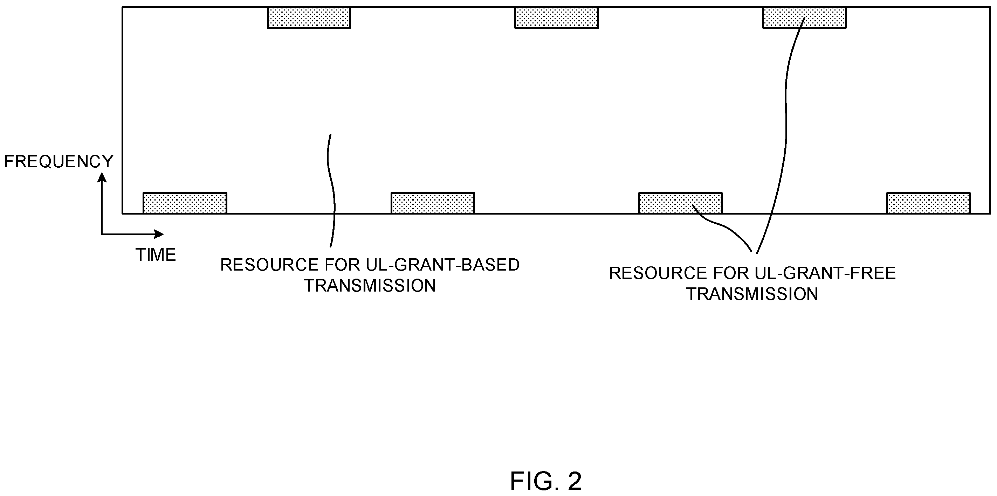

FIG. 2 is a diagram to show examples of resources for use in UL grant-free transmission. As shown in FIG. 2, inter-TTI frequency hopping, intra-TTI frequency hopping and so forth may be applied to frequency resources for use in UL grant-free transmission. Also, time resources for use in UL grant-free transmission may be configured contiguously in time, or may be configured non-contiguously (intermittently) in time. Note that resources other than those used in UL grant-free transmission may be used in UL grant-based transmission.

A UE may perform UL grant-free transmission after resources are configured semi-statically by the network (for example, a radio base station) by using RRC signaling. Also, L1 signaling for activation or deactivation and/or for changing parameters may be applied to UL grant-free transmission by the network. That is, regarding UL grant-free transmission in a carrier that is configured based on higher layer signaling such as RRC signaling, the UE may receive information about the availability of UL grant-free transmission (activation/deactivation) and/or information for changing resources, transmission schemes (the modulation and coding scheme, the number of MIMO layers, RS parameters, etc.), transmission power and so on via a downlink physical control channel (for example, PDCCH), a downlink physical data channel (for example, PDSCH), MAC CEs and so forth, and change the way of controlling UL grant-free transmission in accordance with such pieces of information. This change may take place only in a predetermined period (which lasts 80 ms, for example), or no second change may be made unless a change command is received via higher layer signaling such as RRC signaling or another L1 signaling.

Also, for UL grant-free transmission, studies are in progress on repetition transmission UL data. In repetition transmissions of UL data, it is assumed that a UE repeats transmitting UL data a given number of times (for example, K times) in transport block (TB) units.

The UE may continue transmitting a TB, in repetition, until one of the conditions for stopping is fulfilled. 1 stopping condition may be, for example, that a UL grant for 1 slot or mini-slot in the same TB is received properly. Furthermore, another stop condition may be that the number of times the same TB is repeated reaches the above-mentioned given number.

However, how to enable repetition transmissions of UL grant-free transmission is not decided yet. So, the present inventors have come up with a method of controlling repetition transmissions of UL grant-free transmission properly, and arrived at the present invention. To be more specific, the UE determines in which time resources UL grant-free transmission is to take place, based on the number configured for repetition transmissions (the number of repetitions, K) and whether or not UL grant-free transmission is possible. According to this configuration, it is possible to perform repetition transmissions of UL grant-free transmission properly.

Now, embodiments of the present invention will be described in detail below with reference to the accompanying drawings. Note that the radio communication methods according to the herein-contained embodiments may be used individually or may be used in combinations.

Note that, in the following embodiments, the prefix "NR-" may be attached to arbitrary signals or channels, which may be construed as meaning that these signals or channels are designed for use in NR.

### (Radio Communication Method)

The association between time resources (repetition resources) for UL grant-free transmission in repetition transmissions and indices in repetition transmissions (repetition indices) will be defined below.

Although cases in which slots are repetition resources will be described below with the herein-contained embodiments but other time resources, such as mini-slots, may be used as well.

The repetition index may serve as a counter for repetition transmissions. For example, the repetition index may count repetition resources, or count UL grant-free transmission that is actually performed. When the repetition index reaches the number of repetitions K, UE finishes repetition transmission.

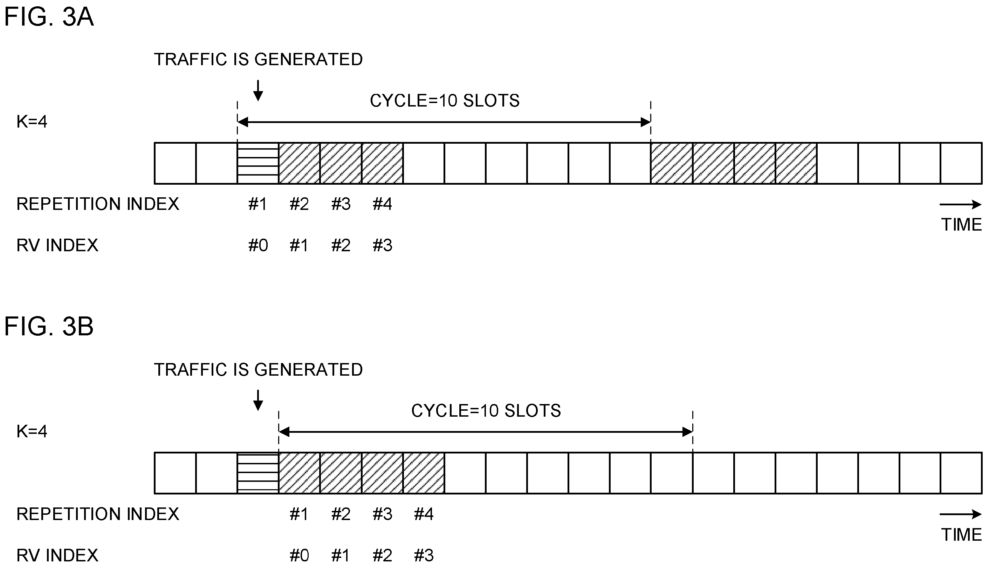

Hereinafter, 2 methods of controlling repetition transmissions will be described with reference to FIG. 3.

As the first method of controlling repetition transmissions, the association between each repetition resource and each repetition index may be explicitly configured by higher layer signaling. For example, a repetition resource may be reported explicitly from the network, and a repetition index may be associated with the repetition resource.

In this case, as shown in FIG. 3A, the number of repetitions K may be the number of repetition resources. K repetition resources are explicitly configured. In this example, K is 4.

When traffic is generated within UE in a slot of a repetition resource, the UE starts repetition transmissions from the first subsequent repetition-resource slot. In this example, traffic is generated at repetition index #1, so that the UE performs UL grant-free transmission at repetition index #2 to #4.

The UE performs UL grant-free transmission K times or less, within K repetition resources that are configured. Each repetition resource may be represented by a repetition index (#1, #2, ...). Each RV may be represented by an RV index (#0, #1, ...). The RV indices may be associated with repetition indices.

Also, the UE may perform repetition transmissions per configured periodicity.

As for the second method of controlling repetition transmissions, the association between each repetition resource and each repetition index may be learned implicitly from the first actual UL grant-free transmission (real transmission). For example, repetition resources may not be reported explicitly from the network, and, instead, repetition indices may be associated with real transmissions.

In this case, as shown in FIG. 3B, the number of repetitions K may be the number of real transmissions. The UE performs actual UL grant-free transmission K times from the first UL grant-free transmission. The RV indices may be associated with repetition indices.

When traffic is generated within the UE, the UE starts repetition transmissions from the first subsequent repetition-resource slot. In this example, traffic is generated at repetition index #1, so that the UE performs UL grant-free transmission at repetition index #2 to #4.

UL grant-free transmission parameters (radio parameters, configuration information, etc.) may be configured from the network to the UE, semi-statically, through higher layer signaling (for example, RRC (Radio Resource Control) signaling, broadcast information (MIB (Master Information Block), SIBs (System Information Blocks) and so on), MAC (Medium Access Control) signaling, and so forth). In addition, parameters for UL grant-free transmission may be set forth in the specification.

Information related to UL grant-free transmission may be reported from the network to the UE, on a dynamic basis, by way of L1 signaling (for example, PDCCH (Physical Downlink Control CHannel) and the like).

Time and/or frequency resources for UL grant-free transmission may be indicated by, for example, indices that relate to time and/or frequency-resources (for example, physical resource block (PRB) indices, cell indices, slot indices, mini-slot indices, subframe indices, symbol indices and the like), the periodicity of resources in the time and/or frequency direction, and so forth.

### (First Example)

With the first example of the present invention, the association between each repetition resource and each repetition index may be explicitly configured by higher layer signaling.

The number of repetitions K in the first example is the number of repetition resources in repetition transmissions.

The repetition indices according to the first example are associated with repetition resources (for example, slots). For example, the repetition indices, as used in the first example, are the index/number (location, counter, etc.) of each repetition resource configured for repetition transmissions.

The UE repeats UL grant-free transmission, until the repetition index reaches K, unless a given stopping condition is fulfilled (for example, L1 signaling to stop on-going UL grant-free transmission is received).

K repetition transmissions may be comprised of real transmissions (real Tx) and virtual transmissions (virtual Tx). In real transmission, UL grant-free transmission is judged possible, and UL grant-free transmission is actually sent out. In virtual transmission, UL grant-free transmission is judged not possible due to the following and/or other reasons, and the UE drops UL grant-free transmission. 1 reason is the mismatch between the time traffic is generated (arrives) at the UE and the time the configured repetition resource is present (produced). Another reason is that UL grant-free transmission is dropped due to collisions between UL grant-free transmission and different types of transmissions.

These collisions occur when, for example, the direction of transmission changes. That is, cases might occur where traffic is generated and a switch is made to DL transmission, and where the UE therefore has to drop UL grant-free transmission. In addition, a collision like this occurs, for example, when an HARQ (Hybrid Automatic Repeat reQuest)-ACK (Acknowledgement) feedback in response to DL data, which cannot be sent in UL grant-free transmission, is produced. Cases might occur where such ACK/NACK feedback transmission is produced when UL grant-free transmission is produced or during repetition transmissions, and where therefore the UE has to drop UL grant-free transmission.

In the first example, cases where UL grant-free transmission is dropped like this occur, so that the number of real transmissions out of K repetition transmissions can be less than K.

In the first example, K contiguous time resources (slots) may be explicitly configured from the network as K repetition resources. One of the numbers of repetitions K, the periodicity of repetition transmissions, and the starting time resource (for example, the offset) in repetition transmissions may be reported from the network, or may be specified in the specification.

The same RV index or different RV indices may be applied to different repetition resources.

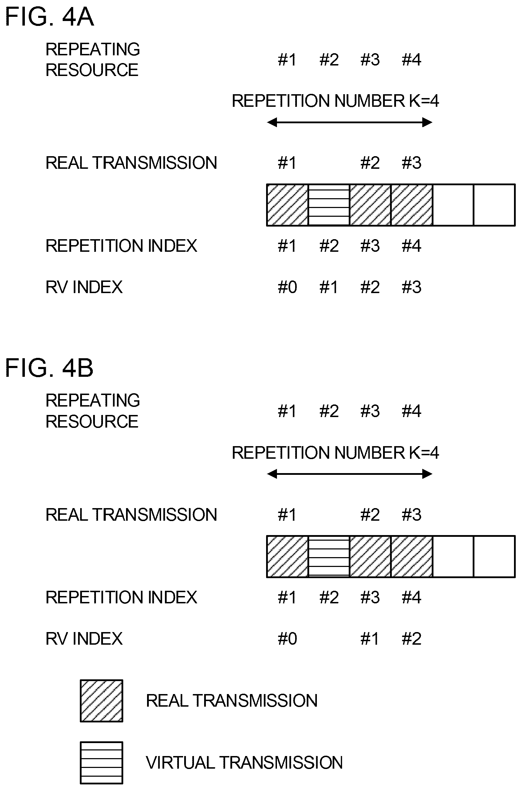

FIGs. 4 show cases where different RV indices are applied to different repetition resources.

### 〈〈Case where repetition indices are associated with repetition resources and where RV indices are also associated with repetition resources〉〉

As shown in FIG. 4A, RV indices may be associated with repetition indices. The repetition indices are associated with repetition resources, so that RV indices may be associated with repetition resources as well. For example, an RV index may be given by the repetition index - 1.

Consequently, if the UE drops one or a number of transmissions out of K repetition transmissions, the RV index is not shifted.

In this case, the repetition indices are provided based on repetition resources, so that the UE can perform repetition transmissions in K repetition resources configured by the network. By this means, collisions between repetition transmissions and other signals can be reduced. Furthermore, by providing RV indices based on repetition resources, the mismatch of RV indices between the network and the UE can be prevented.

### 〈〈Case where repetition indices are associated with repetition resources, and where RV indices are associated with real transmissions〉〉

As shown in FIG. 4B, RV indices may not be associated with repetition indices. The RV indices may be associated with real transmissions. For example, the index of real transmission is counted, and the RV index is given by index of real transmission minus 1

Consequently, if the UE drops one or a number of transmissions out of K repetition transmissions, the RV index is shifted.

In this case, the repetition indices are provided based on repetition resources, so that the UE can perform repetition transmissions in K repetition resources configured by the network. By this means, collisions between repetition transmissions and other signals can be reduced. Also, by providing RX indices based on real transmission indices, different RVs can be applied to different real transmissions. Therefore, when the network and the UE can identify RV indices properly, joint gain can be achieved properly by repetition transmission and receipt using different RVs.

### (Second Example)

With a second example of the present invention, the association between each repetition resource and each repetition index may be determined explicitly from the first actual UL grant-free transmission (real transmission) (second control method).

The number of repetitions K according to the second example indicates the number of times actual transmission is carried out in repetition transmissions.

The repetition indices according to the second example are associated with real transmissions. For example, the repetition indices, as used in the second example, are the index/number (location, counter, etc.) of each real transmission amongst repetition transmissions. Therefore, when UE drops UL grant-free transmission, no repetition index is assigned to the virtual transmission thereof (that is, the repetition index is not incremented).

If some collision occurs following the first real transmission, The UE extends UL grant-free transmission to the following slot until the repetition index reaches K or until a given stopping condition is fulfilled (for example, until L1 signaling to stop on-going UL grant-free transmission is received).

The repetition resources according to the second example cover every time resource (slot) in the period from the first real transmission to the last real transmission in repetition transmissions.

The same RV index or different RV indices may be applied to different repetition resources.

### 〈〈Case where repetition indices are associated with real transmissions, and where RV indices are associated with repetition resources〉〉

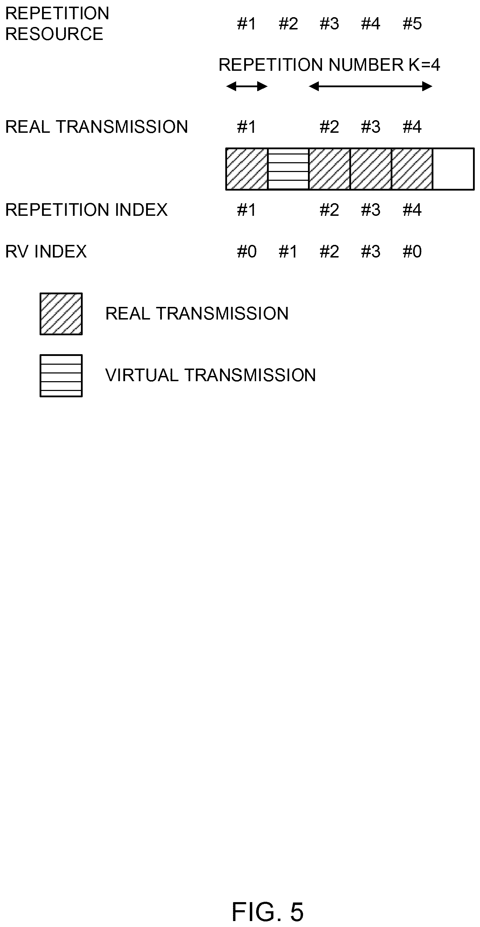

FIG. 5 shows a claimed embodiment where different RV indices are associated with different repetition resources, and where different RV indices are associated with different repetition resources.

For example, different RV indices are associated with an m-th repetition resource (the repetition resource index m).

For example, the RV index in UL grant-free transmission is 0 if the index of the repetition resource is 1, the RV index of real transmission is 1 if the repetition resource index is 2, the RV index of real transmission when the repetition resource index is m is the remainder of m-1 divided by the total number of RVs ((m-1) mod the total number of RVs).

In FIG. 5, K is 4, and the total number of RVs is 4. Since the UE has dropped UL grant-free transmission once, the RV index in the fifth repetition resource (M=5) is 0, from (5-1) mod 4. Thus, even when the number of repetition resources is larger than the total number of RVs, the RV index can be determined.

In this case, repetition indices are provided based on real transmission, so that, even when the UE drops UL grant-free transmission during repetition transmissions, the UE can make real transmission K times, as indicated by the number of repetitions K, unless a given stop condition is fulfilled first. Furthermore, by providing RV indices based on repetition resources, the mismatch of RV indices between the network and the UE can be prevented.

### 〈〈Case where repetition indices are associated with real transmissions, and where RV indices are also associated with real transmissions〉〉

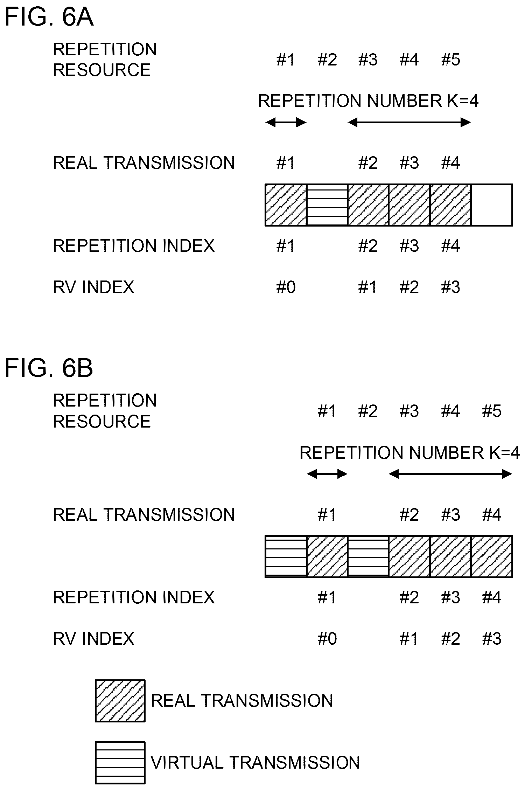

FIG. 6 shows a case where different RV indices are associated with different repetition resources, and where different RV indices are associated with different real transmissions.

For example, as shown in FIG. 6A, different RV indices are associated with the n-th real transmission (real transmission index n). The repetition indices are associated with real transmissions, so that RV indices may be associated with repetition indices as well.

For example, the RV index of real transmission with the repetition index 1 is 0, the RV index of real transmission with the repetition index 2 is 1, and the RV index of real transmission with the repetition index n is the remainder of n-1 divided by the total number of RVs ((n-1) mod the total number of RVs).

In this case, even if a real transmission is postponed, the repetition index and the RV index can be determined from the index of real transmission. For example, as shown in FIG. 6B, even when the UE drops the first UL grant-free transmission in FIG. 6A, the repetition index and the RV index can be determined from the index of real transmission, as in FIG. 6A.

If varying RV indices are associated with an n-th real transmission, RV mismatches might occur between the network and UE. When other UL transmissions (for example, PUCCH, PRACH and/or SRS) are sent out accompanying UL grant-free transmission, so as to help detection by the radio base station, information related to RV may be transmitted by using the types of these UL transmission (channel or signal) sequences, sequence indices and the like.

In this case, repetition indices are provided based on real transmissions, so that, even when the UE drops UL grant-free transmission during repetition transmissions, the UE can make real transmission K times, as indicated by the number of repetitions K, unless a given stop condition is fulfilled first. Also, by providing RX indices based on real transmission indices, different RVs can be applied to different real transmissions. Therefore, when the network and the UE can identify RV indices properly, joint gain can be achieved properly by repetition transmission and receipt using different RVs.

### (Radio Communication System)

Now, the structure of a radio communication system according to one embodiment of the present invention will be described below. In this radio communication system, communication is performed using one of the radio communication methods according to the herein-contained embodiments of the present invention, or a combination of these.

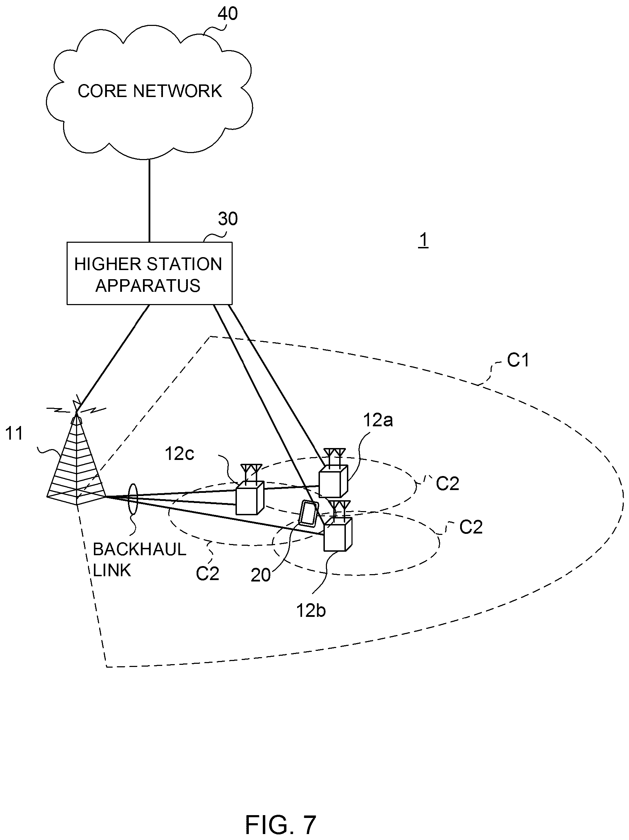

FIG. 7 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 includes a radio base station 11 that forms a macro cell C1, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 are not limited to those illustrated in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a plurality of different numerologies may be used.

The radio base station 11 and a radio base station 12 (or 2 radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), which includes PDSCH and/or PUSCH scheduling information, is communicated by the PDCCH.

Note that scheduling information may be reported in DCI. For example, DCI to schedule receipt of DL data may be referred to as a "DL assignment," and DCI to schedule UL data transmission may also be referred to as a "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### (Radio Base Station)

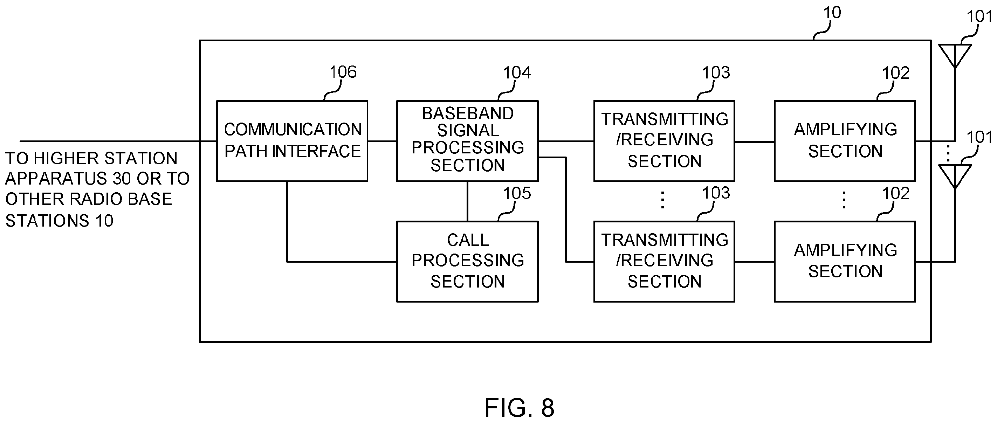

FIG. 8 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

**In** the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 receive data from a user terminal 20, which is transmitted via UL grant-free transmission, in which UL data is transmitted without UL transmission commands (UL grants) from the radio base station 10. In addition, the transmitting/receiving sections 103 may receive information about RV, from the user terminal 20, in UL transmissions other than UL grant-free transmission (for example, PUCCH, PRACH and/or SRS).

In addition, the transmitting/receiving sections 103 may transmit information about UL grant-free transmission to the user terminal 20.

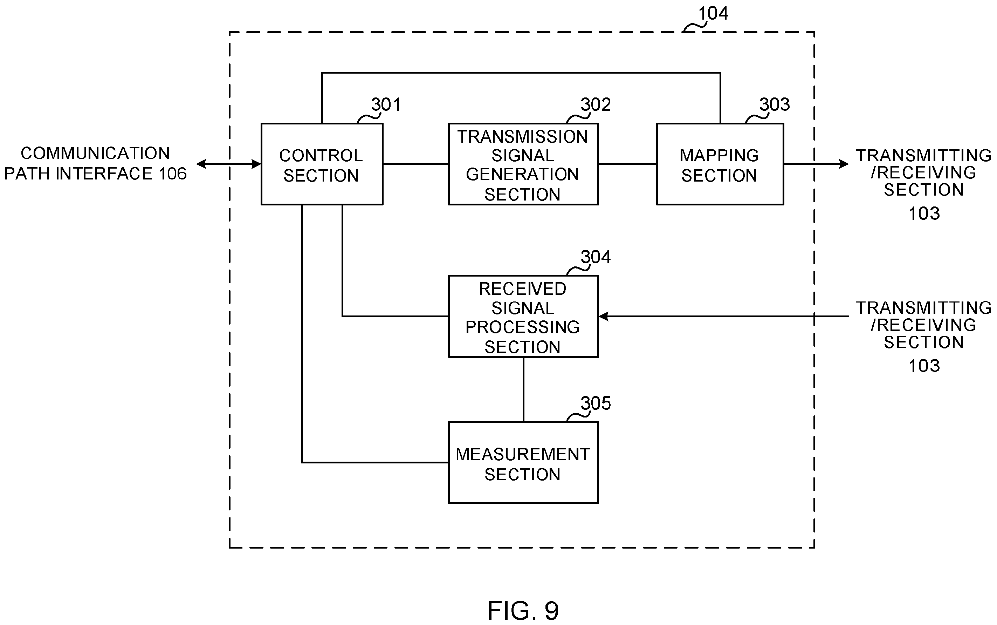

FIG. 9 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), and uplink reference signals.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), SNR (Signal to Noise Ratio), the signal strength (for example, RSSI (Received Signal Strength Indicator)), transmission path information (for example, CSI), and so on. The measurement results may be output to the control section 301.

### (User Terminal)

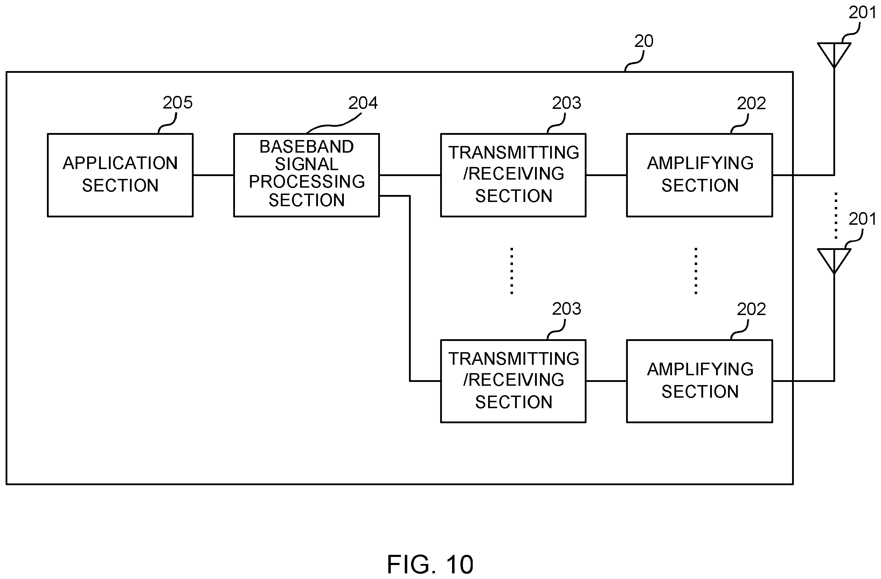

FIG. 10 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. In the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

The transmitting/receiving sections 203 perform UL grant-free transmission, in which UL data is transmitted without UL transmission commands (UL grants) from the radio base station 10.

In addition, the transmitting/receiving sections 203 may receive information about UL grant-free transmission (for example, information about repetition resources), from the radio base station 10.

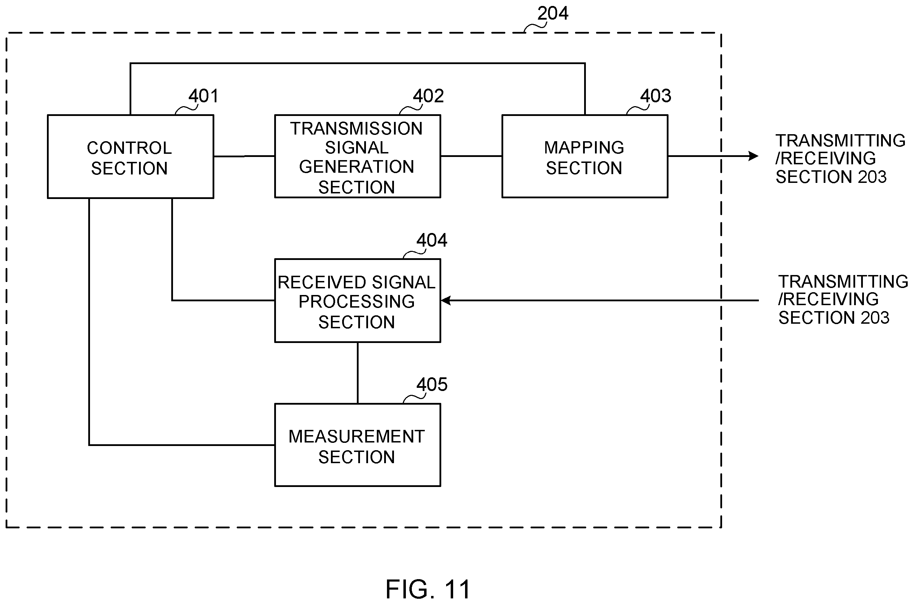

FIG. 11 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

Also, when various pieces of information reported from the radio base station 10 are acquired from the received signal processing section 404, the control section 401 may update the parameters used in the control based on these pieces of information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission information generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI) and so on. The measurement results may be output to the control section 401.

Also, the control section 401 may control repetition transmissions of UL grant-free transmission. Also, the control section 401 may control the selection of time resources (for example, slots) to perform UL grant-free transmission (for example, real transmission) based on the number configured for repetition transmissions (for example, the number of repetitions, K) and whether UL grant-free transmission is possible or not (for example, whether real transmission is performed or virtual transmission is performed).

The number configured here may be the number of time resources (for example, repetition resources) configured for repetition transmissions.

The configured number may be the total number of times UL grant-free transmission (for example, real transmission) is actually performed.

Also, the control section 401 may determine the redundancy version for each UL grant-free transmission based on the time resource for each UL grant-free transmission.

Also, the control section 401 may determine the redundancy version for each UL grant-free transmission based on how many times UL grant-free transmission is actually performed.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by 1 piece of apparatus that is physically and/or logically aggregated, or may be realized by directly and/or indirectly connecting two or more physically and/or logically separate pieces of apparatus (via wire or wireless, for example) and using these multiple pieces of apparatus.

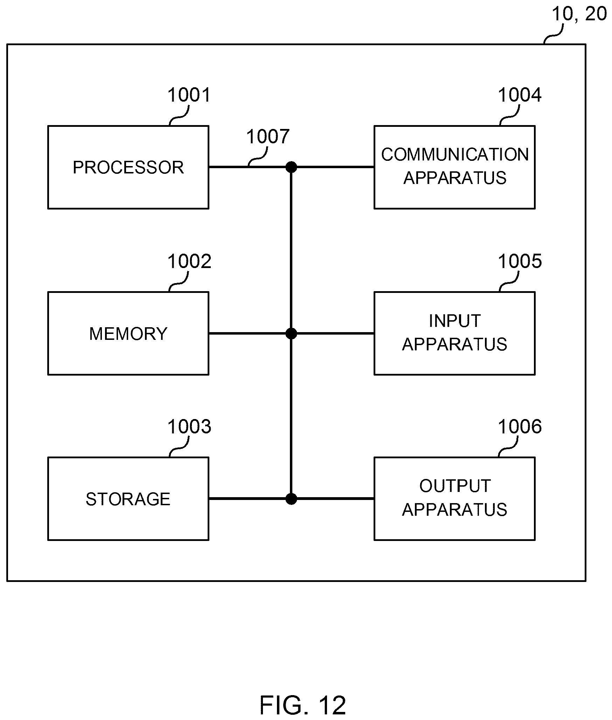

For example, the radio base station, user terminals and so on according to one embodiment of the present invention may function as a computer that executes the processes of the radio communication method of the present invention. FIG. 12 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read given software (programs), thereby allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may be comprised of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or multiple slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "mini-slot," a "sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included per subframe or radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by 1 bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication systems and/or next-generation systems that are enhanced based on these.

The phrase "based on" as used in this specification does not mean "based only on," unless otherwise specified. **In** other words, the phrase "based on" means both "based only on" and "based at least on."

Reference to elements with designations such as "first," "second" and so on as used herein does not generally limit the number/quantity or order of these elements. These designations are used herein only for convenience, as a method for distinguishing between two or more elements. **In** this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access."

As used herein, when 2 elements are connected, these elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical (both visible and invisible) regions.

In the present specification, the phrase "A and B are different" may mean "A and B are different from each other." The terms such as "leave" "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples, and should by no means be construed to limit the present invention in any way.

## Claims

1. A terminal (20) comprising:
a transmitting section (402) configured to transmit an uplink shared channel in resources assigned by a higher layer parameter; and
a control section (401) configured to apply repetitions configured by the higher layer parameter to transmission of the uplink shared channel,
**characterized in that**, if the first transmission of the repetitions starts in an n-th time resource among time resources of the repetitions based on the higher layer parameter and n is a number from 2 to 4, the control section (401) is further configured to apply an n-th redundancy version to the n-th time resource.

2. The terminal (20) according to claim 1, wherein the repetitions are repetitions of a transport block.

3. The terminal (20) according to claim 2, wherein the transmitting section (401) is further configured, if there is no transport block to be transmitted in the assigned resources, to not transmit anything in the assigned resources.

4. The terminal (20) according to any one of claims 1 to 3, wherein the higher layer parameter includes an information that indicates a periodicity of transmission of the uplink shared channel.

5. A radio communication method performed by a terminal (20) comprising:
transmitting an uplink shared channel in resources assigned by a higher layer parameter; and
applying repetitions configured by the higher layer parameter to transmission of the uplink shared channel,
**characterized in that**, if the first transmission of the repetitions starts in an n-th time resource among time resources of the repetitions based on the higher layer parameter and n is a number from 2 to 4, the applying applies an n-th redundancy version to the n-th time resource.

6. A base station (10) comprising:
a control section (301) configured to assign a resource for transmitting of a uplink shared channel and configure a higher layer parameter to configure repetition that is applied to the transmission of the uplink shared channel, wherein the control section (301) determine an n-th redundancy version so that the n-th redundancy version is applied to an n-th resource, if n is a number from 2 to 4 in a first transmission of the repetition by a terminal in in an n-th time resource among time resources of the repetitions;
a transmitting section (302) configured to transmit the higher layer parameter to the terminal; and
a receiving section (304) configured to receive the uplink shared channel in the assigned resource.

7. A system (1) comprising a terminal (20) according to one of claims 1 to 4, and a base station (10) according to claim 6.

## Patentansprüche

1. Endgerät (20), umfassend:
einen Übertragungsabschnitt (402), der so konfiguriert ist, dass er einengemeinsam genutzten Aufwärtsverbindungskanal in Ressourcen überträgt, die durch einen Parameter einer höheren Schicht zugewiesen sind; und
einen Steuerabschnitt (401), der so konfiguriert ist, dass er Wiederholungen, die durch den Parameter einer höheren Schicht konfiguriert sind, auf die Übertragung des gemeinsam genutzten Aufwärtsverbindungskanals anwendet,
**dadurch gekennzeichnet, dass**, wenn die erste Übertragung der Wiederholungen in einer n-ten Zeitressource unter Zeitressourcen der Wiederholungen auf der Grundlage des Parameters einer höheren Schicht beginnt und n eine Zahl von 2 bis 4 ist, der Steuerabschnitt (401) weiter so konfiguriert ist, dass er eine n-te Redundanzversion auf die n-te Zeitressource anwendet.

2. Endgerät (20) nach Anspruch 1, wobei die Wiederholungen Wiederholungen eines Transportblocks sind.

3. Endgerät (20) nach Anspruch 2, wobei der Übertragungsabschnitt (401) weiter so konfiguriert ist, dass er, wenn es keinen in den zugewiesenen Ressourcen zu übertragenen Transportblock gibt, in den zugewiesenen Ressourcen nichts überträgt.

4. Endgerät (20) nach einem der Ansprüche 1 bis 3, wobei der Parameter einer höheren Schicht eine Information einschließt, die eine Periodizität der Übertragung des gemeinsam genutzten Aufwärtsverbindungskanals angibt.

5. Funkkommunikationsverfahren, das von einem Endgerät (20) durchgeführt wird, umfassend:
Übertragen eines gemeinsam genutzten Aufwärtsverbindungskanals in Ressourcen, die durch einen Parameter einer höheren Schicht zugewiesen sind; und
Anwenden von Wiederholungen, die durch den Parameter einer höheren Schicht konfiguriert sind, auf eine Übertragung des gemeinsam genutzten Aufwärtsverbindungskanals,
**dadurch gekennzeichnet, dass**, wenn die erste Übertragung der Wiederholungen in einer n-ten Zeitressource unter Zeitressourcen der Wiederholungen auf der Grundlage des Parameters einer höheren Schicht beginnt und n eine Zahl von 2 bis 4 ist, das Anwenden eine n-te Redundanzversion auf die n-te Zeitressource anwendet.

6. Basisstation (10), umfassend:
einen Steuerabschnitt (301), der so konfiguriert ist, dass er eine Ressource zum Übertragen eines gemeinsam genutzten Aufwärtsverbindungskanals zuweist und einen Parameter einer höheren Schicht konfiguriert, um eine Wiederholung zu konfigurieren, die auf die Übertragung des gemeinsam genutzten Aufwärtsverbindungskanals angewendet wird, wobei der Steuerabschnitt (301) eine n-te Redundanzversion bestimmt, so dass die n-te Redundanzversion auf eine n-te Ressource angewendet wird, wenn n eine Zahl von 2 bis 4 bei einer ersten Übertragung der Wiederholung durch ein Endgerät in einer n-ten Zeitressource unter Zeitressourcen der Wiederholungen ist;
einen Übertragungsabschnitt (302), der so konfiguriert ist, dass er den Parameter einer höheren Schicht an das Endgerät überträgt; und
einen Empfangsabschnitt (304), der so konfiguriert ist, dass er den gemeinsam genutzten Aufwärtsverbindungskanal in der zugewiesenen Ressource empfängt.

7. System (1), umfassend ein Endgerät (20) nach einem der Ansprüche 1 bis 4 und eine Basisstation (10) nach Anspruch 6.

## Revendications

1. Terminal (20) comprenant :
une section de transmission (402) configurée pour transmettre un canal partagé de liaison montante dans des ressources attribuées par un paramètre de couche supérieure ; et
une section (401) de commande configurée pour appliquer des répétitions configurées par le paramètre de couche supérieure à la transmission du canal partagé de liaison montante,
**caractérisé en ce que**, si la première transmission des répétitions commence dans une n-ième ressource temporelle parmi des ressources temporelles des répétitions sur la base du paramètre de couche supérieure et que n est un nombre compris entre 2 et 4, la section (401) de commande est en outre configurée pour appliquer une n-ième version de redondance à la n-ième ressource temporelle.

2. Terminal (20) selon la revendication 1, dans lequel les répétitions sont des répétitions d'un bloc de transport.

3. Terminal (20) selon la revendication 2, dans lequel la section (401) de transmission est en outre configurée, s'il n'y a pas de bloc de transport à transmettre dans les ressources attribuées, pour ne rien transmettre dans les ressources attribuées.

4. Terminal (20) selon l'une quelconque des revendications 1 à 3, dans lequel le paramètre de couche supérieure inclut une information qui indique une périodicité de transmission du canal partagé de liaison montante.

5. Procédé de communication radio mis en oeuvre par un terminal (20) comprenant :
une transmission d'un canal partagé de liaison montante dans des ressources attribuées par un paramètre de couche supérieure ; et
une application de répétitions configurées par le paramètre de couche supérieure à la transmission du canal partagé de liaison montante,
**caractérisé en ce que**, si la première transmission des répétitions commence dans une n-ième ressource temporelle parmi des ressources temporelles des répétitions sur la base du paramètre de couche supérieure et que n est un nombre compris entre 2 et 4, l'application applique une n-ième version de redondance à la n-ième ressource temporelle.

6. Station de base (10) comprenant :
une section de commande (301) configurée pour attribuer une ressource pour une transmission d'un canal partagé de liaison montante et configurer un paramètre de couche supérieure pour configurer une répétition qui est appliquée à la transmission du canal partagé de liaison montante, dans laquelle la section de commande (301) détermine une n-ième version de redondance de sorte que la n-ième version de redondance est appliquée à une n-ième ressource, si n est un nombre compris entre 2 et 4, dans une première transmission de la répétition par un terminal dans une n-ième ressource temporelle parmi des ressources temporelles des répétitions ;
une section de transmission (302) configurée pour transmettre le paramètre de couche supérieure au terminal ; et
une section de réception (304) configurée pour recevoir le canal partagé de liaison montante dans la ressource attribuée.

7. Système (1) comprenant un terminal (20) selon l'une des revendications 1 à 4, et une station de base (10) selon la revendication 6.
